# DEMANDE DE BREVET EUROPEEN

(11) **EP 1 148 755 A1**
(43) Date de publication de la demande: **24.10.2001**
(21) Numéro de dépôt: 01400984.9
(22) Date de dépôt: 17.04.2001
(51) Int. Cl.: H04Q 7/38, H04B 7/26

(54) **Procédé de détermination de la position d'une station mobile d'un réseau de télécommunication mobile**

(30) Priorité: 21.04.2000 FR 0005334
(71) Demandeur: Mitsubishi Electric Information Technology Centre Europe B.V., 1101 AG Amsterdam Zuidoost (NL)
(72) Inventeur: Voyer, Nicolas, 35700 Rennes (FR)
(74) Mandataire: Maillet, Alain

(57) **Abrégé**

La présente invention concerne un procédé de détermination de la position d'une station mobile d'un réseau de télécommunication mobile, ledit réseau comportant une pluralité de stations de base prévues pour prendre au moins, d'une part, un état correspondant à des périodes d'émission de signaux utiles à la détermination de ladite position, ladite station mobile, à la réception desdits signaux utiles, effectuant des mesures de grandeurs desdits signaux utiles caractéristiques pour la mise en oeuvre d'une méthode de détermination de position et, d'autre part, un état correspondant à des périodes de silence pendant lesquelles aucun signal n'est émis.

Selon la présente invention, ledit procédé consiste à prévoir des moyens pour que lesdites périodes d'émission et lesdites périodes de silence soient arrangées en cycles comportant au moins une période de silence, le cycle affecté à une station de base étant identique au cycle affecté à toute station de base qui lui est voisine mais il en est décalé temporellement.

La présente invention concerne également un réseau prévu pour mettre en oeuvre un tel procédé.

## Description

La présente invention concerne un procédé de mesure de la position d'une station mobile d'un réseau de télécommunication mobile.

Il existe dans l'état de la technique plusieurs méthodes de positionnement. L'une des techniques connues de positionnement consiste à faire un relèvement d'angle d'observation d'au moins trois point fixes dont la position est connue à l'avance. A partir des angles mesurés par l'unité à positionner par rapport à un point fixe, il est possible de faire le point, c'est à dire obtenir la position relative d'une station mobile sur une carte contenant les points relevés avec une position connue à l'avance. Cette technique est connue depuis longtemps, pour être la technique plus que séculaire utilisée pour positionner les navires en bordure de côte, à partir de relèvements effectués depuis le navire, de signaux optiques balise, transmis depuis les phares situés sur la côte.

Une autre méthode de positionnement consiste à mesurer la distance entre l'unité à positionner et au moins trois points fixes. A partir de ces distances, mesurées par l'unité à positionner, il est possible de faire le point, c'est-à-dire obtenir la position relative de cette unité sur une carte contenant les points relevés avec une position connue à l'avance. Les points radars, ou bien encore le points GPS rentrent dans ce type de positionnement.

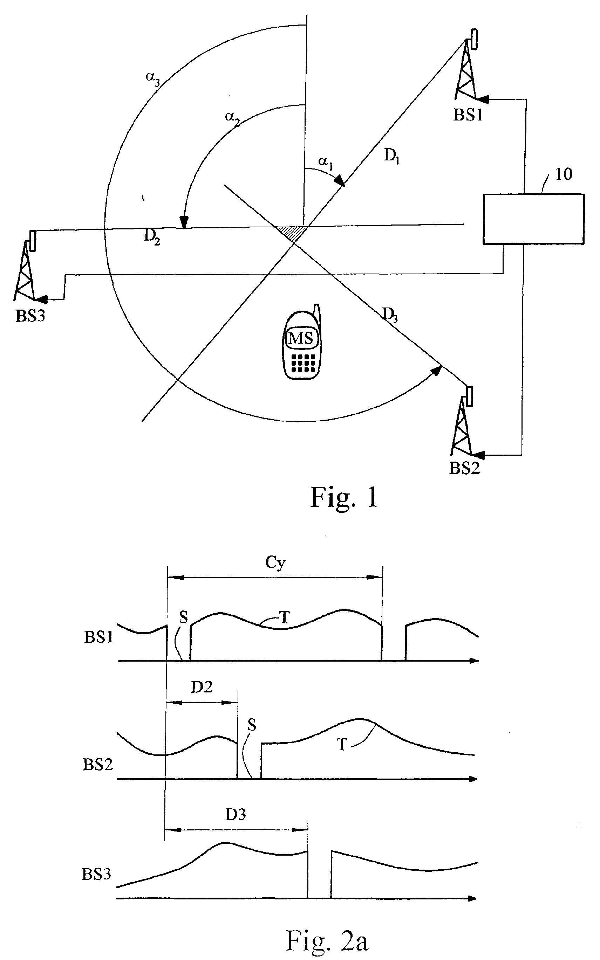

Dans l'une ou l'autre de ces méthodes, il est nécessaire de disposer de trois points dont les positions sont connues à chaque instant *t*. Ces points seront qualifiés par la suite de fixes. Dans un réseau de téléphonie cellulaire, ces trois points sont constitués de trois stations de base, comme cela est illustré à la Fig. 1. Chacune des trois stations de base BS1, BS2 et BS3 émet des signaux de localisation qui sont alors reçus par la station mobile MS. Celle-ci effectue des mesures de grandeurs caractéristiques de ces signaux, grandeurs utilisées pour la mise en oeuvre d'une méthode de détermination de position. Cette méthode pourrait être effectuée par la station mobile MS elle-même mais, dans la pratique, elle l'est dans une unité fixe de détermination de position appartenant au réseau.

Dans le premier mode de fonctionnement mentionné ci-dessus, la station mobile MS va alors mesurer les angles α₁, α₂ et α₃ que forment avec une direction de référence, les directions sous lesquelles les signaux émis par les stations de base BS1, BS2 et BS3 sont reçus. Puis, connaissant la position de chaque station de base BS1, BS2 et BS3 et la mesure de chacun de ces angles, il est possible de déterminer la position de la station mobile MS.

Dans le second mode de fonctionnement mentionné ci-dessus, la station mobile MS va mesurer, par exemple sur la base des différences entre les temps de réception par la station mobile MS des signaux respectivement émis par les stations de base BS1, BS2 et BS3 et les temps d'émission de ces signaux, les distances D₁, D₂ et D₃ entre la station mobile MS et les stations de base BS1, BS2 et BS3 respectives.

Pour mesurer les distances entre la station mobile MS et les stations de base BS1 à BS3, on utilise généralement des stations fixes synchronisées pouvant transmettre des signaux différents. La station mobile est par ailleurs informée de la différence des instants d'émission de ces signaux. La station mobile MS mesure alors le temps relatif de réception de chacun des signaux émis par les stations de base BS1 à BS3, et sur la base de ces temps différents et des coordonnées de toutes les stations de base BS1 à BS3, en déduit sa position.

On notera qu'en réalité, il peut être nécessaire, notamment pour résoudre l'ambiguïté temporelle due à une détection différentielle des temps de réception des signaux transmis de manière synchrone par toutes les stations de base, de disposer d'au moins quatre (et non plus trois) stations de base.

Pour la localisation de stations mobiles dans un réseau cellulaire, il y a de bons atouts pour utiliser des signaux radiofréquences de localisation émis par des stations de base qui font office de points fixes : un seul type de récepteur est nécessaire ; on dispose d'une multitude de points fixes connus ; le système est résistant aux multitrajets ; il ne nécessite pas un trajet direct et permet la localisation de stations mobiles à l'intérieur des bâtiments.

Pour autant, l'utilisation de stations de base synchronisées comme points fixes pour la localisation de stations mobiles dans le réseau de télécommunication pose un certain nombre de problèmes.

Parmi ceux-ci, on peut citer celui où la station mobile MS qui se trouve à proximité d'une station de base SBi alors que cette dernière transmet un signal qui peut être soit un signal de localisation, soit un signal de télécommunication, soit les deux ensemble, recevra ce signal avec un fort niveau de réception. Cependant, les signaux provenant des autres stations de base plus éloignées seront reçus avec un plus faible niveau de réception. Si ces signaux sont par ailleurs transmis sur une même ressource temps-fréquence (comme par exemple, dans un réseau à accès multiple partagé en code CDMA), le signal reçu de la station de base la plus proche interférera avec les signaux provenant des autres stations de base. La mesure de ces derniers signaux ne pourra alors se faire si bien que la localisation échouera.

Pour résoudre ce problème particulier, il a déjà été proposé une solution qui consiste en ce que les stations de base augmentent de temps en temps leurs puissances de transmission de leurs signaux de localisation à un niveau suffisant afin d'assurer une réception correcte, quelle que soit la position du mobile entre ces stations de base, proche ou non d'une de ces stations de base.

Une telle technique impose cependant que ces émissions en sur-puissance ne soient pas toutes activées en même temps pour toutes les stations de base. De plus, elles augmentent drastiquement la puissance des signaux de localisation, au détriment des signaux de télécommunication.

Une autre solution consiste en ce que les stations de base n'émettent plus de signal (incluant les signaux de télécommunication et ceux de radiolocalisation) pendant un instant court. Ainsi, une station mobile qui se trouve à proximité d'une station de base au moment où celle-ci est silencieuse peut faire ses mesures à partir des signaux qu'elle a reçus des autres stations de base et qui ne sont plus brouillés par cette station de base silencieuse.

Cette méthode permet, par rapport à la précédente, un comportement plus stable du réseau de télécommunications. En effet, elle ne dégrade que les signaux de télécommunications normalement transmis par la station de base silencieuse, et favorise au contraire les signaux de télécommunications transmis par les autres stations de base pendant ce temps. Ces derniers signaux n'interfèrent plus avec les signaux de la station de base silencieuse. Cette méthode se fait cependant au détriment des signaux de télécommunications dont l'émission est interrompue pendant les périodes de silence.

Pour réduire l'impact du processus de localisation sur les signaux de télécommunications, il est nécessaire de réduire les temps de silence à un minimum acceptable, soit typiquement une fraction du temps nécessaire à la transmission d'un bloc de données à transmettre sur le réseau de télécommunications, sans que l'on n'observe trop de dégradation dans la réception de ce bloc de données.

Cependant, si l'on réduit trop le temps de non-émission des stations de base, la station mobile ne dispose plus d'assez de temps pour effectuer la mesure des signaux de localisation.

De plus, cette méthode suppose que les signaux de localisation sont transmis de manière continue. En effet, si tel n'était pas le cas, les signaux de localisation des stations de base alentour pourraient ne pas être présents durant les périodes de silence de la station de base silencieuse et la station mobile ne pourrait alors faire ses mesures. Or, l'émission continue des signaux de localisation n'est envisageable que dans la mesure où cela ne perturberait pas trop les signaux de télécommunications.

On notera encore que des stations de base adjacentes ne doivent pas être silencieuses en même temps, sinon la station mobile ne peut pas effectuer de mesures durant ces périodes de silence.

Le but de la présente invention est de proposer une méthode qui ne présente pas les inconvénients mentionnés ci-dessus et qui permette donc que des stations de base adjacentes soient coordonnées.

Un procédé selon la présente invention est du type où ledit réseau comporte une pluralité de stations de base prévues pour prendre au moins, d'une part, un état correspondant à des périodes d'émission de signaux utiles à la détermination de ladite position, ladite station mobile, à la réception desdits signaux utiles, effectuant des mesures de grandeurs desdits signaux utiles caractéristiques pour la mise en oeuvre d'une méthode de détermination de position et, d'autre part, un état correspondant à des périodes de silence pendant lesquelles aucun signal est émis.

Ce procédé est caractérisé en ce qu'il consiste à prévoir des moyens pour que lesdites périodes d'émission et lesdites périodes de silence soient arrangées en cycles comportant au moins une période de silence, le cycle affecté à une station de base étant identique au cycle affecté à toute station de base qui lui est voisine mais il en est décalé temporellement. Ledit décalage temporel est avantageusement égal à un sous-multiple de la durée d'un cycle.

Selon une autre caractéristique de l'invention, le nombre de périodes de silence par cycle est supérieur à un et l'intervalle de temps entre deux périodes de silence adjacentes est égal à une période de base sous-multiple de la durée d'un cycle. Le décalage temporel entre deux stations de base est avantageusement un multiple entier de ladite période de base.

Selon une autre caractéristique de l'invention, chaque cycle comprend, outre au moins une période de transmission de signaux de télécommunication et au moins une période de silence, une période d'émission de signaux de localisation spécifiques.

Selon une autre caractéristique de l'invention, l'intervalle de temps entre deux périodes d'émission de signaux de localisation adjacentes, celui entre une période d'émission de signaux de localisation et une période de silence adjacentes, celui entre une période de silence S et une période d'émission de signaux de localisation E adjacentes et celui entre deux périodes de silence adjacentes sont identiques et égales à ladite période de base.

Selon une autre caractéristique de l'invention, la puissance d'émission des signaux de localisation spécifiques est plus élevée que la puissance d'émission des signaux de télécommunication.

Selon une autre caractéristique de l'invention, les périodes de transmission des signaux de localisation sont de même durée que les périodes de silence S.

Selon une autre caractéristique de l'invention, chaque station de base du réseau, pour être pilotée, reçoit deux informations : d'une part, une information représentative du schéma du cycle qui lui est affecté, et, d'autre part, une information représentative du décalage temporel de son cycle par rapport à une référence.

Selon une autre caractéristique de l'invention, on regroupe les stations de base dudit réseau par groupes identiques de stations de base voisines, les stations de base d'un même groupe ayant le même schéma de cycle mais des décalages différents et deux stations de base qui se correspondent deux à deux d'un groupe à l'autre ayant leurs décalages temporels égaux.

Selon une autre caractéristique de l'invention, on regroupe lesdites stations de base d'un réseau par un nombre N, lesdites stations de base ayant des cycles à M périodes de base PB supérieurs à N.

La présente invention concerne également un réseau de télécommunication mobile qui est prévu pour pouvoir mettre en oeuvre le procédé dont les caractéristiques essentielles viennent d'être décrites.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue schématique d'un réseau à trois stations de base illustrant la détermination de la position d'une station mobile dans ce réseau,
Les Figs. 2a et 2b sont respectivement deux diagrammes des temps de la puissance émise par les trois stations de base d'un réseau qui, d'une part, est conforme à celui de la Fig. 1 et, d'autre part, met en oeuvre un premier mode et un second mode de mise en oeuvre d'un procédé selon la présente invention,
La Fig. 3 est une vue schématique d'un réseau à sept stations de base destiné à mettre en oeuvre un procédé selon la présente invention,
Les Fig. 4a et 4b sont respectivement deux diagrammes des temps de la puissance émise par les sept stations de base d'un réseau qui, d'une part, est conforme à celui de la Fig. 3 et, d'autre part, met en oeuvre deux modes de mise en oeuvre d'un procédé selon la présente invention,
Les Figs. 5a à 5c sont des vues schématiques d'un même réseau illustrant un mode de mise en oeuvre du procédé de la présente invention, et ce à sept instants différents,
La Fig. 6 est une vue schématique d'un même réseau illustrant un mode de mise en oeuvre du procédé de la présente invention, et ce à trois instants différents, et
La Fig. 7 est un diagramme des temps de la puissance émise par les trois stations de base d'un réseau qui, d'une part, est conforme à celui de la Fig. 1 et, d'autre part, met en oeuvre un mode de mise en oeuvre d'un procédé selon la présente invention.

A la Fig. 1, on peut voir que les stations de base BS1, BS2 et BS3 sont pilotées par une unité de contrôle 10 de manière qu'elles puissent prendre au moins deux états d'émission : un état correspondant à des périodes d'émission de signaux de télécommunication incluant outre des signaux utilisateurs, des signaux de signalisation et de synchronisation et un état correspondant à des périodes de silence pendant lesquelles aucun signal n'est émis.

Pour pouvoir déterminer la localisation d'une station mobile MS, celle-ci doit mettre en oeuvre une méthode de mesure de grandeurs physiques, telles que le temps d'arrivée ou l'angle d'incidence, des signaux de localisation qu'elle reçoit des stations de base. Ces signaux peuvent être des signaux de synchronisation qui sont contenus dans les signaux de télécommunication émis par les stations de base.

Selon une caractéristique de la présente invention, les stations de base du réseau sont pilotées de manière que les périodes d'émission de signaux de télécommunication et les périodes de silence sont arrangées en cycles comportant au moins une période de silence. Le cycle affecté à une station de base est identique au cycle affecté à toute station de base qui lui est voisine mais il en est décalé temporellement.

La notion de voisinage utilisée ici est par exemple définie par l'unité de contrôle du réseau 10 qui contrôle le fonctionnement des stations de base BS1, BS2 et BS3 du réseau. C'est ainsi que cette unité de contrôle 10 détermine, pour chaque temps *t*, par exemple, les stations de base qui doivent émettre leurs signaux de télécommunication ainsi que les stations de base qui doivent devenir silencieuses tout en tenant compte des cycles affectés à chacune d'elles.

On a représenté à la Fig. 2a la puissance qui est émise en fonction du temps *t* par les stations de base BS1, BS2 et BS3 du réseau représenté à la Fig. 1. Sur cette Fig. 2a, chaque station de base BS1, BS2, BS3 émet un signal de télécommunication incluant outre des signaux utilisateurs des signaux de signalisation et de synchronisation entrecoupés par des périodes de silence notées S. Les périodes d'émission des signaux de télécommunication sont notées T. A la Fig. 2a, on a représenté le cycle d'émission Cy affecté à la station de base BS1. On notera que dans ce cas particulier, un cycle Cy ne comporte qu'une seule période de silence S.

Par rapport au cycle Cy, le cycle qui est affecté à la station de base BS2 (non représenté totalement) est décalé temporellement d'un temps noté D2 et celui qui est affecté à la station de base BS3 est décalé d'un temps noté D3. On notera que la station de base BS1 est ici prise comme référence. Les temps D2 et D3 sont déterminés ou prédéterminés dans l'unité de contrôle 10.

Selon une autre caractéristique de la présente invention, chaque cycle comprend outre au moins une période de transmission de signaux de télécommunication et au moins une période de silence, au moins une période d'émission de signaux de localisation spécifiques.

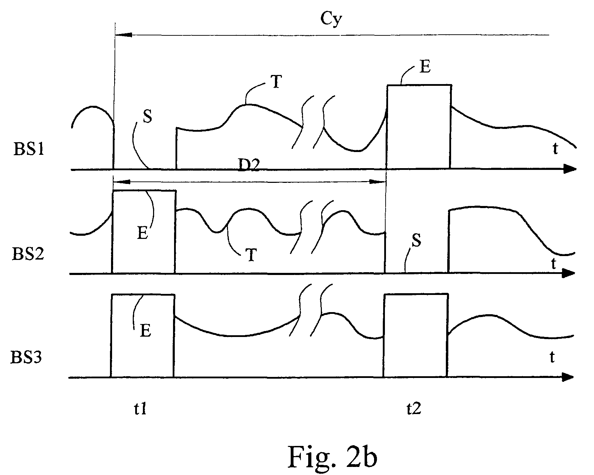

Ainsi, comme cela est visible à la Fig. 2b, une station de base BS1, BS2 ou BS3 peut se trouver dans trois états d'émission : un état correspondant à des périodes notées T d'émission des signaux de télécommunication, un état correspondant à des périodes notées E d'émission de signaux de localisation spécifiques et un état correspondant à des périodes notées S de silence pendant lesquelles ni signaux de télécommunication ni signaux de localisation ne sont émis par la station de base correspondante.

On notera que la puissance d'émission des signaux de localisation spécifiques est généralement plus élevée que la puissance d'émission des signaux de télécommunication.

Selon une caractéristique de la présente invention, les périodes de transmission des signaux de localisation E sont de même durée que les périodes de silence S.

Sur cette Fig. 2b, on notera que le décalage temporel D2 entre le cycle affecté à la station de base BS1 et celui qui est affecté à la station de base BS2 est égal à l'intervalle de temps qui sépare une période de silence et une période d'émission E. Ainsi, lorsqu'au moins une station de base, en l'occurrence la station de base BS1 au temps *t1* ou la station de base BS2 au temps *t2*, se trouve dans une période de silence, les stations de base BS2 et BS3 au temps *t1* puis les stations de base BS1 et BS3 *t2*, qui lui sont voisines se trouvent dans une période d'émission de leurs signaux de localisation.

On notera que les stations de base alternent de manière régulière les périodes de silence, les périodes de transmission de signaux de localisation et les périodes de communication normale et, ce, sous le contrôle de l'unité de contrôle 10 du réseau auquel appartiennent les stations de base concernées (en l'occurrence sur la Fig. 1, les stations de base BS1, BS2 et BS3).

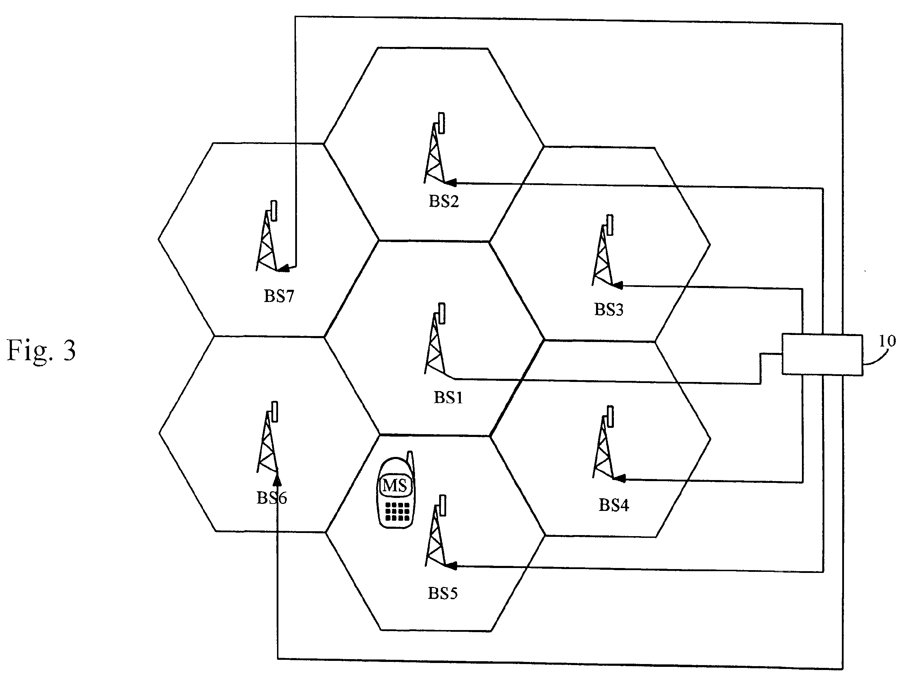

On a représenté à la Fig. 3 un réseau de sept stations de base BS1 à BS7 dont les couvertures respectives, encore appelées dans le domaine de la technique cellules, sont schématisées sous la forme d'hexagones adjacents. En réalité, les signaux émis par les stations de base SB1 à SB7 peuvent être reçus au delà de leurs cellules respectives. Ceci est particulièrement vrai en ce qui concerne les signaux de localisation spécifiques qu'elles émettent, dans l'exemple représenté à la Fig. 3, à destination de toute station mobile MS susceptible de les recevoir.

Toutes les stations de bases BS1 à BS7 de ce réseau sont pilotées par une unité de contrôle 10 qui assure, entre autre, la synchronisation de leurs émissions respectives.

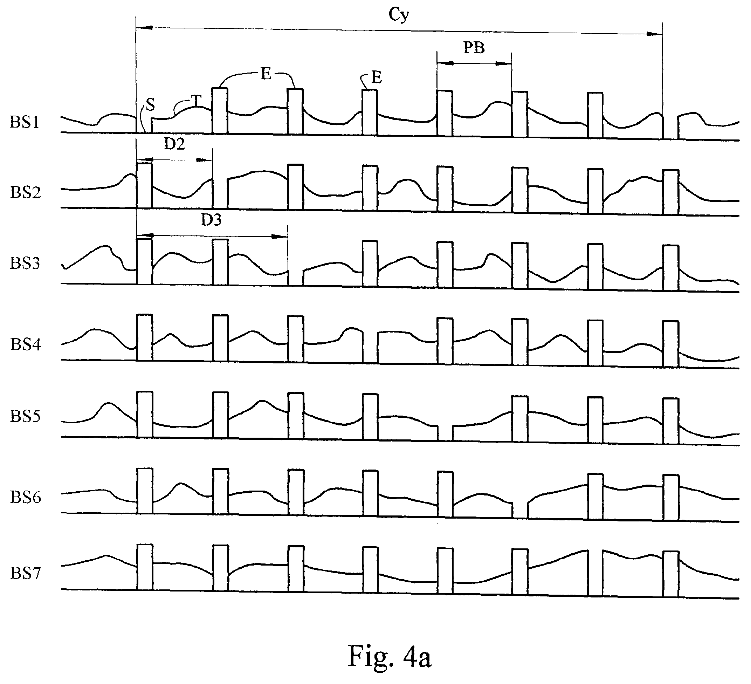

On a représenté à la Fig. 4a la puissance d'émission de chaque station de base de ce réseau telle que l'unité de contrôle 10 la commande dans un premier mode de réalisation exemplatif. A cette Fig. 4a, les périodes de transmission de signaux de télécommunication sont notées T, les périodes d'émission des signaux de localisation sont notées E et les périodes de silence sont notées S. Comme on peut le constater, chaque station de base BS1 à BS7 émet selon un cycle constitué de périodes de transmission T séparées entre elles par une période de silence S suivie de six périodes d'émission E. Ainsi, au temps *t1*, alors que la station de base BS1 est silencieuse, toutes les stations de base BS2 à BS7 émettent leurs signaux de localisation. De même, au temps *t2*, alors que la station de base BS2 est silencieuse, toutes les stations de base BS1, BS3 à BS7 émettent leurs signaux de localisation. Et ainsi de suite ...

Les durées des périodes de télécommunication entre deux périodes d'émission de signaux de localisation E, celles entre une période d'émission de signaux de localisation E et une période de silence S, et celles entre une période de silence S et une période d'émission de signaux de localisation E sont identiques et égales à une période que l'on nommera par la suite période de base PB. Le décalage temporel entre deux stations de base est un multiple entier de cette période de base PB. Il est par exemple égal à PB entre la station de base BS1 et la station de base BS2, de 2.PB entre la station de base BS1 et la station de base BS3, etc.

On constate que, alors qu'une seule station de base (par exemple la station de base BS1 au temps *t1*) est silencieuse, les autres émettent des signaux de localisation (par exemple les stations de base BS2 à BS7). Une station mobile MS reçoit, pendant cette période de temps, les signaux de localisation des stations mobiles BS2 à BS7 et peut donc, normalement, déterminer de suite sa position sur la base de ces signaux. Bien que cette mise en oeuvre particulière donne entière satisfaction, il est des cas où se pose le problème des interférences entre stations de base qui émettent en même temps.

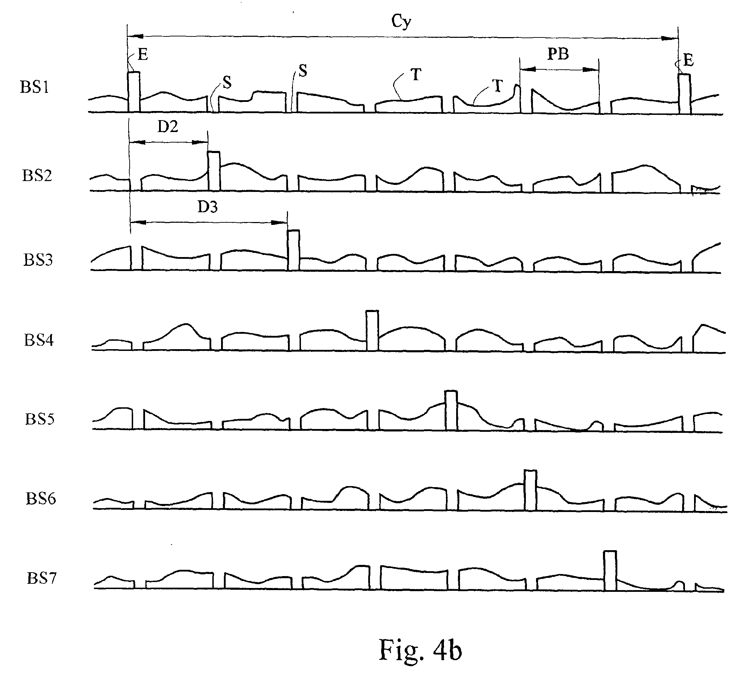

On a représenté à la Fig. 4b la puissance d'émission de chaque station de base du réseau représenté à la Fig. 3 telle que l'unité de contrôle 10 la commande dans un second mode de réalisation exemplatif. Comme on peut le constater, chaque station de base BS1 à BS7 émet selon un cycle constitué de périodes de transmission T séparées entre elles par une période d'émission E suivie de six périodes de silence S. Au temps *t1*, alors que la station de base BS1 émet un signal de localisation, toutes les stations de base BS2 à BS7 sont silencieuses. De même, au temps *t2*, alors que la station de base BS2 émet un signal de localisation, toutes les stations de base BS1, BS3 à BS7 deviennent silencieuses. Et ainsi de suite ...

On remarquera que cette mise en oeuvre peut être vue comme équivalente à la précédente mise en oeuvre dans laquelle on échange les périodes de silence et les périodes de localisation. Elle en présente d'ailleurs les mêmes caractéristiques de décalage temporel.

Dans ce mode de réalisation, alors qu'une station de base (par exemple la station de base BS1) émet un signal de localisation, les autres stations de base (par exemple les stations de base BS2 à BS7) sont dans une période de silence. Il en résulte qu'une station mobile ne reçoit, pendant cette période, qu'un seul signal de localisation spécifique, lequel n'est pas brouillé par des interférences avec d'autres signaux émis par d'autres stations de base. Néanmoins, pour effectuer une détermination de position, plusieurs mesures lui seront alors nécessaires.

D'autres mises en oeuvre pourraient également être prévues. Par exemple, pour chaque station de base et dans un cycle, plusieurs périodes d'émission E pourraient suivre plusieurs périodes de silence S, le résultat pouvant être vu comme une combinaison des modes de réalisation représentés aux Fig 4a et 4b.

Selon un mode de réalisation avantageux, l'unité de contrôle 10 transmet à chacune des stations de base BS1 à BS7 du réseau, deux informations : d'une part le schéma du cycle Cy, c'est-à-dire sa constitution en termes de périodes d'émission E et de périodes de silence S, leur nombre respectif, et leur positionnement dans le cycle et, d'autre part, un décalage temporel Di (i = 1 à 7) par rapport à une référence. Avantageusement, ce décalage temporel est un multiple de la période de base PB.

Dans l'exemple de la Fig. 4a, la constitution du cycle est la suivante : une période de silence S suivie de six périodes d'émission de signaux de localisation E. Le décalage est nul pour la station de base BS1, égal à une période de base PB pour la station de base BS2, égal à deux périodes de base PB pour la station de base BS3, etc.

De même, dans l'exemple de la Fig. 4b, la constitution du cycle est la suivante : une période d'émission de signaux de localisation E suivie de six périodes de silence S. Quant au décalage, il est nul pour la station de base BS1, égal à une période de base PB pour la station de base BS2, égal à deux périodes de base PB pour la station de base BS3, etc.

Selon une autre caractéristique de la présente invention, les stations de base d'un réseau sont regroupées par groupes identiques de stations de base voisines. A l'intérieur de chaque groupe, les stations de base ont la même constitution de cycle mais des décalages différents. D'un groupe à l'autre d'un même réseau, les stations de base se correspondent deux à deux. Deux stations de base qui se correspondent ont la même position relativement aux autres stations de base des mêmes groupes qu'elles et leurs décalages temporels sont égaux.

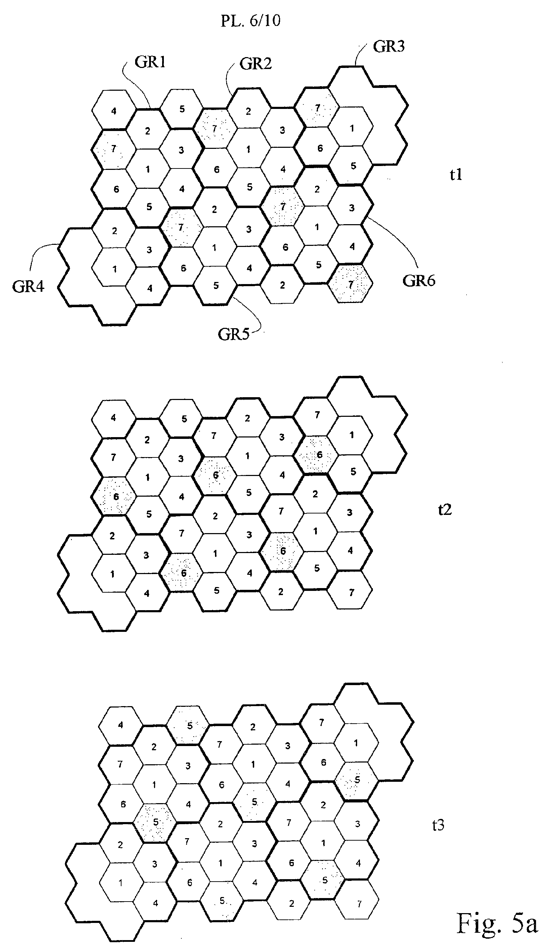

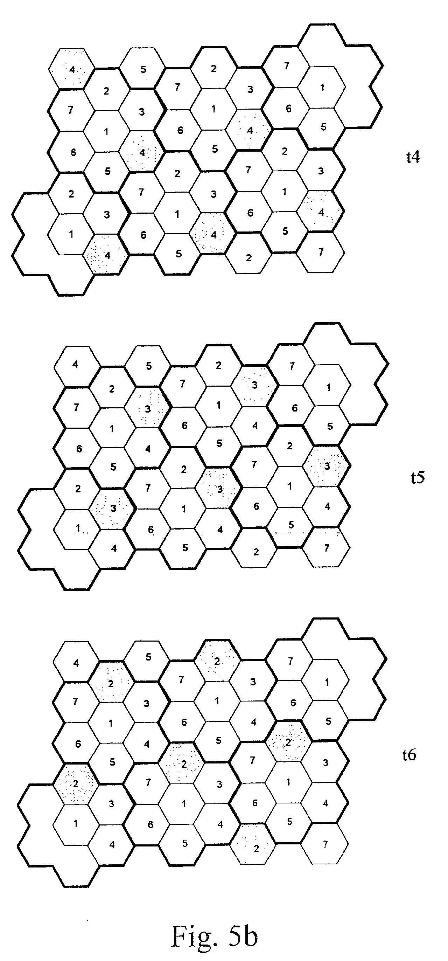

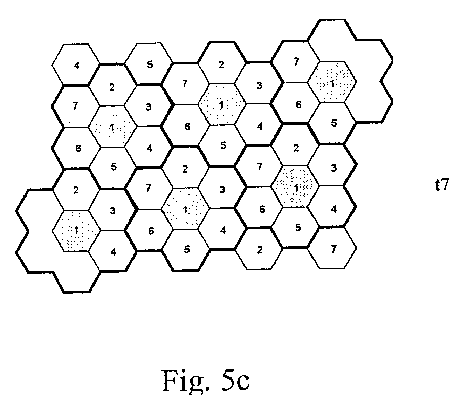

Par exemple, aux Figs. 5a à 5c, les stations de base sont schématisées par leurs cellules respectives. Elles sont regroupées de manière à former des groupes (six GR1 à GR6 sont visibles sur les Figs. 5a à 5c) de sept stations de base arrangées à la manière de celles qui sont représentées à la Fig. 3. Aux Figs. 5a à 5c, ces groupes sont représentés entourés d'un trait fort. Egalement aux Figs. 5a à 5c, les stations de base de deux groupes différents qui se correspondent portent la même référence.

Sur les Figs. 5a à 5c, on a représenté en grisé une cellule dont la station de base se trouve dans un premier état d'émission (soit un état de silence, soit un état d'émission de signaux de localisation ou de signaux de télécommunication) et en blanc une cellule dont la station de base se trouve dans un second état d'émission (respectivement soit un état d'émission de signaux de localisation ou de signaux de télécommunication, soit un état de silence).

Aux Figs. 5a à 5c, on a représenté les différents états d'émission des stations de base à sept instants *t1* à *t7* différents.

Au temps *t1*, alors que les stations de base 7 se trouvent dans un premier état d'émission (un état de silence ou un état d'émission), les autres stations de base 1 à 6 se trouvent dans un second état d'émission (respectivement un état d'émission ou un état de silence).

Au temps *t2*, ce sont les stations de base 6 de chaque groupe qui se trouvent dans un premier état d'émission (un état de silence ou un état d'émission) alors que les autres stations de base 1 à 5 et 7 se trouvent dans un second état d'émission (respectivement un état d'émission ou un état de silence).

Et ainsi de suite jusqu'au temps *t7* d'où l'on repart sur le temps *t1*.

On peut constater que, dans la géométrie particulière de chaque groupe et compte tenu de l'organisation des cycles d'émission, une station de base qui se trouve dans un premier état d'émission est toujours entourée de six stations de base qui se trouvent dans un second état d'émission. On peut également constater que deux stations de base qui se correspondent de deux groupes adjacents sont au moins séparées entre elles de deux stations de base.

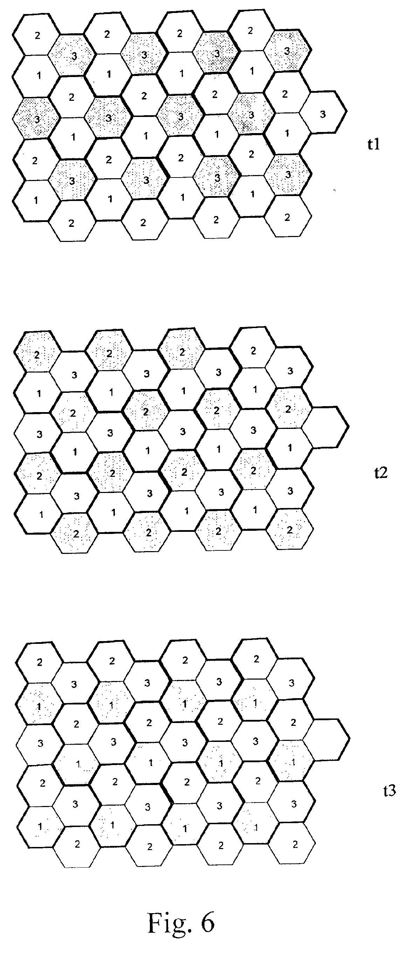

On a représenté à la Fig. 6 des diagrammes identiques aux diagrammes des Figs. 5a à 5c mais pour des groupes constitués uniquement de trois stations de base. A l'instar de ce qui se passait aux Figs.5a à 5c, on peut constater qu'au temps *t1*, alors que les stations de base 3 se trouvent dans un premier état d'émission (un état de silence ou un état d'émission), les autres stations de base 1 et 2 se trouvent dans un second état d'émission (respectivement un état d'émission ou un état de silence). De même au temps *t2*, ce sont les stations de base 2 de chaque groupe qui se trouvent dans un premier état d'émission (un état de silence ou un état d'émission) alors que les autres stations de base 1 et 3 se trouvent dans un second état d'émission (respectivement un état d'émission ou un état de silence). Enfin au temps *t3*, ce sont les stations de base 1 de chaque groupe qui se trouvent dans un premier état d'émission (un état de silence ou un état d'émission) alors que les autres stations de base 2 et 3 se trouvent dans un second état d'émission (respectivement un état d'émission ou un état de silence).

On constatera sur ces deux exemples de mise en oeuvre que la taille des groupes utilisés détermine le nombre de périodes d'émission de signaux de localisation et le nombre de périodes silencieuses au sein d'un même cycle. Ces périodes sont au nombre de sept dans le cas où chaque groupe est constitué de sept stations de base et sont au nombre de trois dans le cas où il est constitué de trois stations de base.

Dans les exemples donnés ci-dessus, le nombre de périodes d'émission où les stations de base se trouvent dans un premier état est égal à un, et le nombre de périodes d'émission où elles se trouvent dans un second état d'émission est respectivement de six et deux. Ceci étant, d'autres configurations des cycles peuvent être envisagées sans pour cela sortir du cadre de la présente invention.

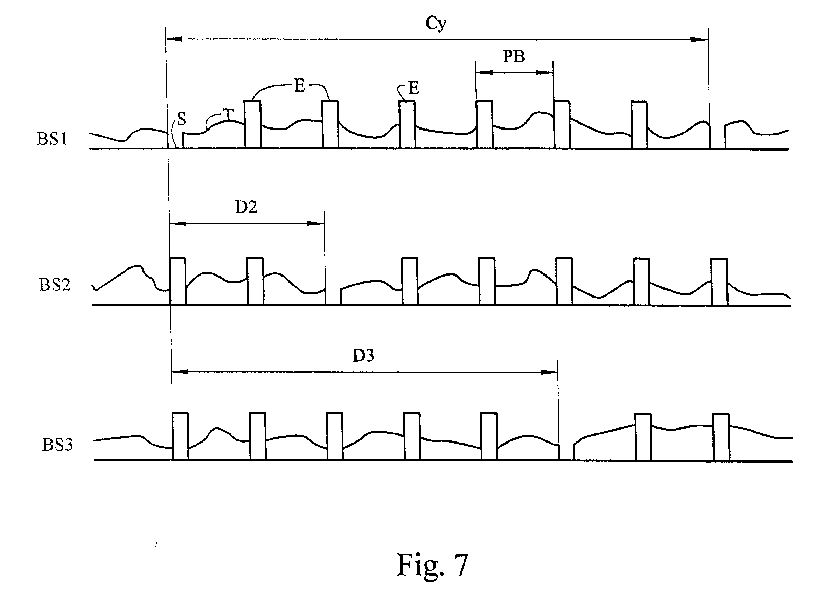

On a représenté à la Fig. 7, les puissances d'émission de trois stations de base BS1, BS2 et BS3 auxquelles sont respectivement affectés des cycles à sept périodes de base PB. De manière générale, on peut regrouper des stations de base d'un réseau par un nombre N, ces stations de base ayant des cycles à M périodes de base PB supérieurs à N. Ceci permet de s'assurer de n'avoir pas à effectuer trop souvent un nouveau plan de regroupement lors de l'ajout de nouvelles stations de base dans le réseau.

Dans l'exemple donné ci-dessus en référence à la Fig. 7, on pourra plus que doubler le nombre de sites sans nécessiter de revoir complètement toute la planification des décalages. Il suffira en effet d'allouer au sein d'un même regroupement les décalages restés disponibles pour les nouvelles stations de base ajoutées au sein de ce regroupement.

## Revendications

1. Procédé de détermination de la position d'une station mobile d'un réseau de télécommunication mobile, ledit réseau comportant une pluralité de stations de base prévues pour prendre au moins, d'une part, un état correspondant à des périodes d'émission de signaux utiles à la détermination de ladite position, ladite station mobile, à la réception desdits signaux utiles, effectuant des mesures de grandeurs desdits signaux utiles caractéristiques pour la mise en oeuvre d'une méthode de détermination de position et, d'autre part, un état correspondant à des périodes de silence pendant lesquelles aucun signal n'est émis, **caractérisé en ce qu'**il consiste à prévoir des moyens pour que lesdites périodes d'émission et lesdites périodes de silence soient arrangées en cycles comportant au moins une période de silence, le cycle affecté à une station de base étant identique au cycle affecté à toute station de base qui lui est voisine mais il en est décalé temporellement.

2. Procédé de mesure selon la revendication 1, **caractérisé en ce que** ledit décalage temporel est égal à un sous-multiple de la durée d'un cycle.

3. Procédé de mesure selon la revendication 1 ou 2, **caractérisé en ce que** le nombre de périodes de silence par cycle est supérieur à un et **en ce que** l'intervalle de temps entre deux périodes de silence adjacentes est égal à une période de base sous-multiple de la durée d'un cycle.

4. Procédé de mesure selon la revendication 3, **caractérisé en ce que** le décalage temporel entre deux stations de base est un multiple entier de ladite période de base.

5. Procédé de mesure selon une des revendications précédentes, **caractérisé en ce que** chaque cycle comprend, outre au moins une période de transmission de signaux de télécommunication et au moins une période de silence, une période d'émission de signaux de localisation spécifiques.

6. Procédé de mesure selon la revendication 5, **caractérisé en ce que** l'intervalle de temps entre deux périodes d'émission de signaux de localisation adjacentes, celui entre une période d'émission de signaux de localisation et une période de silence adjacentes, celui entre une période de silence S et une période d'émission de signaux de localisation E adjacentes et celui entre deux périodes de silence adjacentes sont identiques et égales à ladite période de base.

7. Procédé de mesure selon la revendication 5 ou 6, **caractérisé en ce que** la puissance d'émission des signaux de localisation spécifiques est plus élevée que la puissance d'émission des signaux de télécommunication.

8. Procédé de mesure selon la revendication 5, 6 ou 7, **caractérisé en ce que** les périodes de transmission des signaux de localisation sont de même durée que les périodes de silence S.

9. Procédé de mesure selon une des revendications précédentes, **caractérisé en ce que** chaque station de base du réseau, pour être pilotée, reçoit deux informations : d'une part, une information représentative du schéma du cycle qui lui est affecté, et, d'autre part, une information représentative du décalage temporel de son cycle par rapport à une référence.

10. Procédé de mesure selon une des revendications précédentes, **caractérisé en ce que** l'on regroupe les stations de base dudit réseau par groupes identiques de stations de base voisines, les stations de base d'un même groupe ayant le même schéma de cycle mais des décalages différents et deux stations de base qui se correspondent deux à deux d'un groupe à l'autre ayant leurs décalages temporels égaux.

11. Procédé de mesure selon la revendication 10, **caractérisé en ce que** l'on regroupe lesdites stations de base d'un réseau par un nombre N, lesdites stations de base ayant des cycles à M périodes de base PB supérieurs à N.

12. Réseau de télécommunication mobile comportant une pluralité de stations de base pilotées par une unité de contrôle de manière à ce que lesdites stations de base puissent prendre au moins, d'une part, un état correspondant à des périodes d'émission de signaux utiles à un station mobile pour déterminer sa position par la mise en oeuvre d'une méthode de détermination de position et, d'autre part, un état correspondant à des périodes de silence pendant lesquelles aucun signal n'est émis, caractérisé en ce ladite unité de contrôle est prévue pour que lesdites périodes d'émission et lesdites périodes de silence soient arrangées en cycles comportant au moins une période de silence, le cycle affecté à une station de base étant identique au cycle affecté à toute station de base qui lui est voisine mais il en est décalé temporellement.

13. Réseau selon la revendication 12, **caractérisé en ce que** ledit décalage temporel est égal à un sous-multiple de la durée d'un cycle.

14. Réseau selon la revendication 12 ou 13, **caractérisé en ce que** le nombre de périodes de silence par cycle est supérieur à un et **en ce que** l'intervalle de temps entre deux périodes de silence adjacentes est égal à une période de base sous-multiple de la durée d'un cycle.

15. Réseau selon la revendication 14, **caractérisé en ce que** le décalage temporel entre deux stations de base est un multiple entier de ladite période de base.

16. Réseau selon une des revendications 12 à 15, **caractérisé en ce que** chaque cycle comprend, outre au moins une période de transmission de signaux de télécommunication et au moins une période de silence, une période d'émission de signaux de localisation spécifiques.

17. Réseau selon la revendication 16, **caractérisé en ce que** l'intervalle de temps entre deux périodes d'émission de signaux de localisation adjacentes, celui entre une période d'émission de signaux de localisation et une période de silence adjacentes, celui entre une période de silence S et une période d'émission de signaux de localisation E adjacentes et celui entre deux périodes de silence adjacentes sont identiques et égales à ladite période de base.

18. Réseau selon la revendication 16 ou 17, **caractérisé en ce que** la puissance d'émission des signaux de localisation spécifiques est plus élevée que la puissance d'émission des signaux de télécommunication.

19. Réseau selon la revendication 16, 17 ou 18, **caractérisé en ce que** les périodes de transmission des signaux de localisation sont de même durée que les périodes de silence S.

20. Réseau selon une des revendications 12 à 19, **caractérisé en ce que** chaque station de base du réseau, pour être pilotée, reçoit deux informations : d'une part, une information représentative du schéma du cycle qui lui est affecté, et, d'autre part, une information représentative du décalage temporel de son cycle par rapport à une référence.

21. Réseau selon une des revendications 12 à 20, **caractérisé en ce que** lesdites stations de base dudit réseau sont regroupées par groupes identiques de stations de base voisines, les stations de base d'un même groupe ayant le même schéma de cycle mais des décalages différents et deux stations de base qui se correspondent deux à deux d'un groupe à l'autre ayant leurs décalages temporels égaux.

22. Procédé de mesure selon la revendication 21, **caractérisé en ce que** lesdites stations de base d'un réseau sont regroupées par un nombre N, lesdites stations de base ayant des cycles à M périodes de base PB supérieurs à N.
